# EUROPEAN PATENT SPECIFICATION

(11) **EP 1 914 903 B1**
(45) Date of publication and mention of the grant of the patent: **23.06.2010**
(21) Application number: 06301068.0
(22) Date of filing: 20.10.2006
(51) Int. Cl.: H04B 1/707

(54) **Method and system for indoor communications with radio frequency distribution**
Verfahren und System für ein Innenraum-Funkkommunikationssystems mit Verteilung von Hochfrequenzsignalen
Procédé et système pour un système de radiocommunication intérieur avec distribution de signaux radioélectriques

(43) Date of publication of application: 23.04.2008
(73) Proprietor: Alcatel Lucent, 75008 Paris (FR)
(72) Inventor: Hettstedt, Heinz-Dieter, 30916, Isernhagen (DE)
(74) Representative: Korakis-Ménager, Sophie

(56) References cited:
- WO-A-2004/004399
- US-A1- 2006 229 019
- US-A1- 2006 233 111

## Description

The present invention relates to indoor communication systems, particularly inside buildings and tunnels, comprising a radio frequency (RF) distribution network.

From US 2006/0229019 A1 a method and an arrangement for testing wireless devices and system behavior in the presence of emulated network traffic and emulated fault conditions are known. Thereby, to emulate fault conditions like multi-path and other channel effects, first a wireless signal is received at a receiver from a transmitting device having a specific physical relationship to the receiver, second channel effects associated with the specific physical relationship imposed on the received signal are derived, third the derived channel effects are stored, and fourth the derived channel effects are applied to subsequently transmitted wireless signals, in order to disturb communications for test purpose. To emulate multi-path effects, an incoming signal is split into at least two sub-signals, then the sub signals are individually attenuated and time delayed and/or phase adjusted before combining them. Further the arrangement comprises additional devices. Disadvantageously the arrangement intends to emulate fault conditions disturbing communications in order to test wireless devices and system behavior instead of improving indoor communications.

Multipath techniques are also described in US 2006/0233111.

Wireless communications systems are becoming an increasingly widespread phenomenon of modern communications. Since many users place an increasing number of cellular calls within buildings or other confined structures, there is a need to achieve high quality indoor coverage.

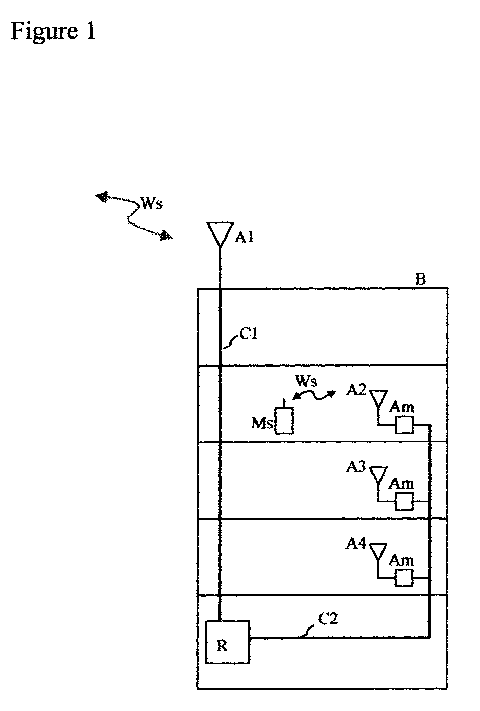

A conventional configuration to extend a wireless communication service e.g. GSM or UMTS, from an outdoor environment to an indoor area is shown in Figure 1 and is characterized by the utilization of a repeater R that is typically located within a building B to retransmit within the building a wireless signal Ws received at an external antenna A1 or retransmit outside the building the wireless signals Ws of mobile stations Ms, e.g. mobile phones, handheld computers and the like, located inside the building B. In the downlink, that is when the wireless signals Ws from the external environment are transmitted to the mobile stations Ms inside the building B, said outdoor wireless signals are passed along a first connection C1 to the repeater R which forwards the signal along a second connection C2 to a plurality of inter-connected amplifiers Am, the amplifiers amplify those signals which are then transmitted over the in-building antennas A2 to A4. In the uplink direction, that is, when the wireless signals Ws from the mobile stations Ms are transmitted to a wireless infrastructure outside the building B, the repeater R receives said signals along connection C2 and transmits them along connection C1 to the external antenna A1.

It is also possible that the repeater R of the indoor communications structure is replaced by a base station connected to a communications core network along connection C1.

Connections C1 and C2 may be a radio frequency (RF) connection or network, e.g. using coaxial cable, an optical connection or network, e.g. using optical fiber, or a high-speed data distribution network such as an Ethernet network, e.g. using a Category 5 cable. The in-building antennas A2 to A4 may also be implemented as RF radiating cables, e.g. this is typically the case when the wireless signals shall be propagated in tunnels.

The object of the present is to provide a method and a system for indoor communications which improves the quality of the wireless indoor service coverage.

The object is achieved by a method for indoor communications according to claim 1 and/or 2, a communication system according to claim 3.

The basic idea behind the invention arises from the observation that in indoor or confined environments the multi-path time delay of the radio signals reaching or transmitted by a mobile station is shorter than the minimum needed for a rake receiver of the mobile station or a base station to work properly i.e. at least one chip length (e.g. 260 ns for UMTS). In such cases then there is no benefit from the technical advantages of the rake receivers, already present in the mobile stations, in order to achieve improved reception i.e. a rake receiver shows a higher Signal to Noise Ratio (SNR) in a multi-path environment than in an environment without multi-path effects. With the present solution, optimum outdoor multi-path propagation effects are emulated in indoor "clean" environments (locations where the overall differential time delay of radio signals due to multi-path propagation is shorter than 1 chip length). The method and system for indoor communications according to the invention allows the generation of signals having multi-path time delays of at least one chip length. According to the invention, combining a plurality of substantially identical sub-signals showing different time delays between them of at least one chip length, generates a new signal showing a behavior similar to a radio signal in an outdoor multi-path environment.

The solution can be applicable for indoor downlink or uplink transmission or both for indoor downlink and uplink transmission. For signal uplink direction, that is from mobile station to the base station, it is advantageous that the rake receiver of the base station receives signals with multi-path delays greater than 1 chip length, and for signal downlink direction, that is from the base station to the mobile station, it is advantageous that the rake receiver of the mobile station receives signals with multi-path delays greater than 1 chip length.

According to the present invention, the solution is preferably adapted for transmission of signals to and from a mobile station located in a confined area, such as a building or a tunnel, using at least an RF transmission network. The system for indoor communications according to the invention comprises an RF network for distribution of signals between a base station and an RF remote unit which provides the signals to an indoor antenna or a radiating cable. The RF remote units comprise RF transmitting or receiving means for transmitting or receiving the RF signals along the RF distribution network.

The RF network according to the invention is used advantageously to improve the service performance for radio communications into buildings and tunnels which do not provide system conditions sufficient to optimally benefit from the rake receivers of mobile stations or base stations using, for example, CDMA or UMTS communication technology.

An embodiment example of the invention is now explained with the aid of Figures 1 to 4.

Figure 1 shows a conventional indoor communications system structure.

Figure 2 shows an example structure of an indoor communications system according to the invention.

Figure 3 shows an exemplary detail of an indoor communications system according to the invention.

Figure 4 shows a multi-path arrangement according to the invention.

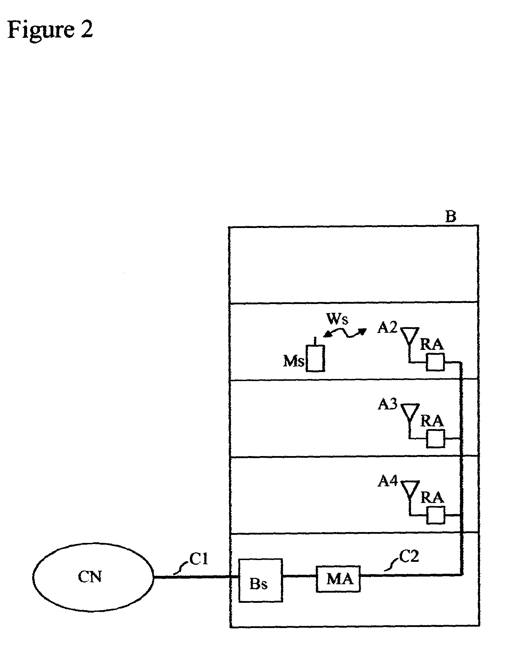

An example of an indoor communications system structure according to the invention, located inside a building B, is shown in Figure 2, comprising a base station Bs, an RF network C2, a multi-path arrangement MA, three RF remote units RA and three in-building antennas A2 to A4. The base station Bs is connected to a core network CN along a first connection network C1 and the indoor antennas A2 to A4 send and receive radio signals Ws to/from a mobile station Ms.

In the downlink direction, communications core network CN signals intended for the mobile station Ms are received by the base station Bs along connection C1. Said signals are then passed through the base station RF interface to the RF network C2 for distribution. The RF network comprises the multi-path arrangement MA where the RF signals are split into at least two substantially identical RF sub-signals, a different time delay is applied to each individual RF sub-signal so that the at least two substantially identical RF sub-signals have a time delay difference of at least 1 chip length, and subsequently the RF sub-signals are combined. Said combined signals at the output of the multi-path arrangement MA are distributed to the RF remote units RA, which adapt the received RF signal, e.g. with the use of an amplifier, for transmission through the in-building antennas A2 to A4. Since the in-building antennas transmit this new radio signal showing multi-path effects, the performance of rake receivers within the mobile stations of the building is optimized and the quality of reception in such an environment is improved.

In the uplink direction, radio signals Ws transmitted by the mobile station Ms located inside the building are received by the in-building antenna A2 and passed to the RF remote unit RA, which adapts the signals, e.g. with the use of an amplifier, for transmission through the RF connection C2 to the multi-path arrangement MA. According to the invention, in the multi-path arrangement, said RF signals are split into at least two substantially identical RF sub-signals, a different time delay is applied to each individual RF sub-signal so that the at least two substantially identical RF sub-signals have a time delay difference of at least 1 chip length, and subsequently the RF sub-signals are combined. Said combined signals at the output of the multi-path arrangement MA are distributed to the base station Bs, which provides said signals, in appropriate form, to a rake receiver within the base station which is in charge of processing the multi-path signal components and obtain the transmitted mobile station signal. Said signal is then forwarded to the communications core network CN. By emulating multi-path effects in the signals received from the mobile stations located in environments that are free of multi-path effects, the performance of the rake receiver within the base station is optimized and the reception performance in uplink direction is thus improved.

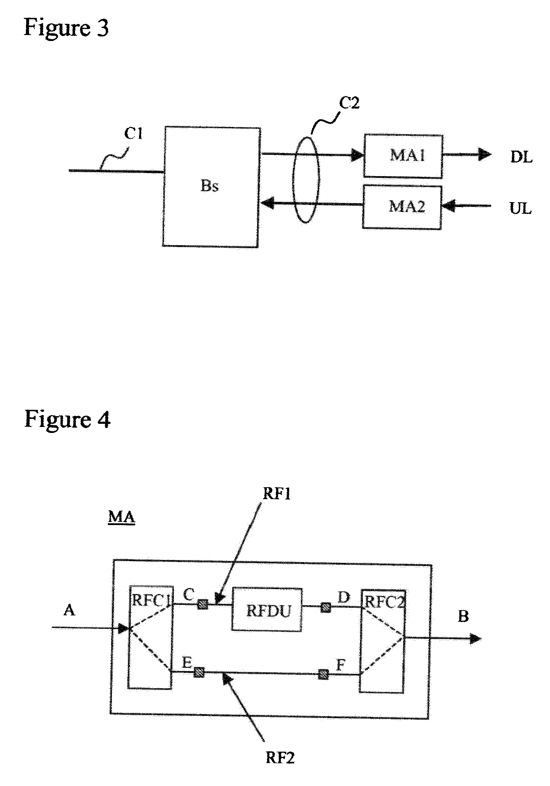

Figure 3 shows an exemplary detail of an indoor communications system comprising a first connections network C1, a base station Bs, an RF network C2 and two multi-path arrangements MA1 and MA2 according to the invention, the first for downlink transmission DL and the second for uplink transmission UL.

Although two separate RF lines are shown, one for uplink UL and one for downlink DL, there is also the possibility to use only one RF line for both uplink and downlink when further known techniques for distinguishing the RF uplink signal from the RF downlink signal are applied to the RF distribution network.

Figure 4 shows an example of a multi-path arrangement MA according to the invention for an RF network, comprising an RF signal input port A, an RF signal output port B, two RF transmission lines RF1 and RF2, two RF couplers RFC1 and RFC2, nodes C,D, E and F, and an RF delay unit RFDU.

The RF signal input A is connected to the first RF coupler RFC1 which splits an incoming optical signal in two substantially identical RF sub-signals and outputs them in nodes C and E. A first RF transmission line RF1 is connected between output node C of the first RF coupler RFC1 and input node D of the second RF coupler RFC2. A second RF transmission line RF2 is connected between output node E of the first RF coupler RFC1 and input node F of the second RF coupler RFC2. An RF delay unit RFDU is arranged in the first RF transmission line RF1. The second RF coupler RFC2 combines the two incoming RF sub-signals into a single RF signal at output port B.

The first RF coupler RFC1 splits an incoming RF signal that is fed in input port A into two substantially identical RF sub-signals. Those two RF sub-signals take two different signal paths ACDB and AEFB. The signal path ACDB introduces a time delay of at least one chip length, e.g. at least 260 ns for UMTS, to that RF sub-signal. The second RF coupler RFC2 combines the two sub-signals after passing through their individual signal paths ACDB and AEFB to a new RF output signal showing a behavior similar to a signal in a multi-path environment.

Although Figure 4 shows an arrangement with only two signal paths, it is possible to implement a multi-path arrangement MA comprising more than two signal paths. Then, the preferred condition is that each signal path "n" comprises a time delay of at least a multiple of the chip length ("n x chip length", n = 0,1,2, ...), that is, the individual signal paths provide time delays of zero, one, two, three etc. chip lengths. An incoming signal is then split into a number "n+1" of substantially identical RF sub-signals equal to the number of signal paths. After the sub-signals have passed through their individual signal paths they are combined to a new signal at output port B showing multi-path effects, that is showing a behavior similar to a radio signal received in an outdoor multi-path environment. The new combined signal comprises the necessary characteristics needed for the rake receivers present in mobile stations and base stations to demodulate this signal. This enables the activation of the so-called rake effect providing a higher SNR in receivers of node base stations and mobile phones.

The RF delay unit RFDU can be implemented as a coaxial waveguide wherein the inner conductor is a helix of a predetermined length, but other generally known implementation methods are possible, e.g. by influencing the permeability of a dielectric as disclosed in US 6,556,102, a tunable RF delay unit can also be implemented.

For the sake of generalization, it is understood for a person skilled in the art that since the multi-path arrangement MA is a reciprocal passive device, its transmission characteristics are identical in both port directions AB - BA. It is also understood that although presented in the figures as a standalone arrangement of the RF transmission network of the indoor communications system said functionality can also be implemented inside the RF remote unit or the base station of the indoor communications system.

## Claims

1. Method for indoor communications, the method comprising
- a base station (Bs) receiving a signal intended for a mobile station (Ms) located inside a confined environment (B).
- the base station (Bs) adapting said signal for transmission through an RF network (C2),
- the RF network (C2) distributing the RF signal to a RF remote unit (RA), which adapts the RF signal for transmission through a wireless transmission means (A2 to A4),
- the mobile station (Ms) receiving the signal transmitted by the wireless transmission means (A2 to A4) and providing said signal to a rake receiver,
the method **characterized in**
- a multi-path arrangement (MA), arranged within the RF network, splitting the RF signal into at least two substantially identical RF sub-signals, applying a different time delay to each individual RF sub-signal so that the time delay differences between the RF sub-signals is at least one chip length, and combining the at least two RF sub-signals with different time delays.

2. Method for indoor communications, the method comprising
- a wireless reception means (A2 to A4) receiving a wireless signal (Ws) from a mobile station (Ms) located inside a confined environment (B),
- the wireless reception means (A2 to A4) passing the received signal to an RF remote unit (RA) which adapts the signal for transmission through an RF network (C2),
- the RF network (C2) distributing the RF signal to a base station (Bs), and the base station (Bs) providing the received signal to a rake receiver,
the method **characterized in**
- a multi-path arrangement (MA), arranged within the RF network, splitting the RF signal into at least two substantially identical RF sub-signal, applying a different time delay to each individual RF sub-signal so that the time delay differences between the RF sub-signals is at least one chip length, and combining the at least two RF sub-signals with different time delays.

3. Communication system extending wireless communications from an outdoor environment to a confined indoor environment (B) and vice versa, the communication system comprising:
- a base station (Bs) for receiving a signal intended for a mobile station (Ms) located inside the confined environment (B),
- means to adapt said signal for transmission through a RF network (C2),
- the RF network (C2) distributing the RF signal to a RF remote unit (RA) which adapts the RF signal for transmission through a wireless transmission means (A2 to A4) located inside the confined environment (B),
- the mobile station (Ms) with a rake receiver to receive the wireless signal (Ws) transmitted by the wireless transmission means (A2 to A4),
- a wireless reception means (A2 to A4) located inside the confined environment (B) to receive a wireless signal (Ws) from a mobile station (Ms) located inside the confined environment (B),
- means to pass said received signal from said wireless reception means (A2 to A4) to the RF remote unit (RA), which adapts the signal for transmission through the RF network (C2),
- the RF network (C2) distributing said RF signal to the base station (Bs),
- the base station (Bs) providing the signal to a rake receiver,
said communication system is **characterized in**
a multi-path arrangement (MA) arranged within the RF network (C2), which multi-path arrangement (MA) comprises:
- means to split the RF signal into at least two substantially identical RF sub-signals,
- means to apply a different time delay to each individual RF sub-signal, so that the time delay difference between the RF sub-signals is at least one chip length, and
- means to combine the at least two RF sub-signals with different time delays
in order to generate a RF signal showing multi-path attributes and thus to improve wireless indoor communications with a base (Bs) and/or mobile station (Ms) comprising a rake-receiver.

## Patentansprüche

1. Verfahren für die Innenraumkommunikation, wobei das Verfahren umfasst:
- Eine Basisstation (Bs), welche ein für eine sich innerhalb einer begrenzten Umgebung (B) befindliche Mobilstation (Ms) bestimmtes Signal empfängt,
- wobei die Basisstation (Bs) das besagte Signal für die Übertragung über ein Funknetzwerk (C2) anpasst,
- wobei das Funknetzwerk (C2) das Funksignal an eine entfernte Funkeinheit (RA) verteilt, welche das Funksignal für die Übertragung über ein drahtloses Übertragungsmittel (A2 bis A4) anpasst,
- wobei die Mobilstation (Ms) das von dem drahtlosen Übertragungsmittel (A2 bis A4) übertragene Signal empfängt und das besagte Signal an einen Rake-Empfänger bereitstellt,
wobei das Verfahren **gekennzeichnet ist durch**
- eine Mehrpfadanordnung (MA), welche innerhalb des Funknetzwerks angeordnet ist, Aufspalten des Funksignals in mindestens zwei im Wesentlichen identische Funk-Teilsignale, Anwenden einer unterschiedlichen Zeitverzögerung für jedes einzelne Funk-Teilsignal, so dass die Zeitverzögerungsdifferenz zwischen den Funk-Teilsignalen mindestens eine Chiplänge beträgt, und Kombinieren der mindestens zwei Funk-Teilsignale mit unterschiedlichen Zeitverzögerungen.

2. Verfahren für die Innenraumkommunikation, wobei das Verfahren umfasst:
- Ein drahtloses Empfangsmittel (A2 bis A4) für den Empfang eines drahtlosen Signals (Ws) von einer sich innerhalb einer begrenzten Umgebung (B) befindlichen Mobilstation (MS),
- wobei das drahtlose Empfangsmittel (A2 bis A4) das empfangene Signale an eine entfernte Funkeinheit (RF) weiterleitet, welche das Signal für die Übertragung über ein Funknetzwerk (C2) anpasst,
- wobei das Funknetzwerk (C2) das Funksignal an eine Basisstation (Bs) verteilt und
die Basisstation (Bs) das empfangene Signal an einen Rake-Empfänger bereitstellt, wobei das Verfahren **gekennzeichnet ist durch**
- eine Mehrpfadanordnung (MA), welche innerhalb des Funknetzwerks angeordnet ist, Aufspalten des Funksignals in mindestens zwei im Wesentlichen identische Teilsignale, Anwenden einer unterschiedlichen Zeitverzögerung für jedes einzelne Funk-Teilsignal, so dass die Zeitverzögerungsdifferenz zwischen den Funk-Zeitsignalen mindestens eine Chiplänge beiträgt, und Kombinieren der mindestens zwei Funk-Teilsignale mit unterschiedlichen Zeitverzögerungen.

3. Kommunikationssystem zum Erweitern von drahtlosen Kommunikationen von einer Außenraumumgebung in eine begrenzte Innenraumumgebung (B) und umgekehrt, wobei das Kommunikationssystem umfasst:
- Eine Basisstation (Bs) zum Empfangen eines für eine sich innerhalb der begrenzten Umgebung (B) befindlichen Mobilstation (Ms) bestimmten Signals,
- Mittel zum Anpassen des besagten Signals für die Übertragung über ein Funknetzwerk (C2),
- wobei das Funknetzwerk (C2) das Funksignal an eine entfernte Funkeinheit (RA) verteilt, welche das Funksignal für die Übertragung über ein sich innerhalb der begrenzten Umgebung (B) befindliches drahtloses Übertragungsmittel (A2 bis A4) anpasst,
- die Mobilstation (Ms) mit einem Rake-Empfänger zum Empfangen des von dem drahtlosen Übertragungsmittel (A2 bis A4) übertragenen drahtlosen Signals (Ws),
- ein drahtloses Empfangsmittel (A2 bis A4) innerhalb der begrenzten Umgebung (B) zum Empfangen eines drahtlosen Signals (Ws) von einer sich innerhalb der begrenzten Umgebung (B) befindlichen Mobilstation (Ms),
- Mittel zum Weiterleiten des empfangenden Signals von dem besagten drahtlosen Empfangsmittel (A2 bis A4) an die entfernte Funkeinheit (RA), welche das Signal für die Übertragung über das Funknetzwerk (C2) anpasst,
- wobei das Funknetzwerk (C2) das besagte Funksignal an die Basisstation (Bs) verteilt,
- wobei die Basisstation (Bs) das Signal an den Rake-Empfänger bereitstellt,
wobei das besagte Kommunikationssystem **gekennzeichnet ist durch**
eine Mehrpfadanordnung (MA), welche innerhalb des Funknetzwerks (C2) angeordnet ist, wobei die Mehrpfadanordnung (MA) umfasst:
- Mittel zum Aufspalten des Funksignals in mindestens zwei im Wesentlichen identische Funk-Teilsignale,
- Mittel zum Anwenden einer unterschiedlichen Zeitverzögerung auf jedes einzelne Funk-Teilsignal, so dass die Zeitverzögerungsdifferenz zwischen den Funk-Teilsignalen mindestens eine Chiplänge beträgt, und
- Mittel zum Kombinieren der mindestens zwei Funk-Teilsignale mit unterschiedlichen Zeitverzögerungen,
um ein Funksignal mit Mehrpfadattributen zu erzeugen und dadurchdrahtlose Innenraumkommunikationen mit einer Basisstation (Bs) und/oder einer Mobilstation (Ms) mit einem Rake-Empfänger zu verbessern.

## Revendications

1. Procédé de communication intérieure, le procédé comprenant
- station de base (Bs) recevant un signal destiné à une station mobile (Ms) se trouvant à l'intérieur d'un environnement confiné (B),
- station de base (Bs) adaptant ledit signal pour la transmission dans un réseau RF (C2),
- réseau RF (C2) distribuant le signal RF vers une unité distante RF (RA), qui adapte le signal RF pour la transmission grâce à des moyens d'émission sans fil (A2 à A4),
- station mobile (Ms) recevant le signal émis par les moyens d'émission sans fil (A2 à A4) et délivrant ledit signal à un récepteur à ratissage,
le procédé étant **caractérisé par**
- arrangement à trajets multiples (MA), agencé à l'intérieur du réseau RF, fractionnant le signal RF en au moins deux sous-signaux RF sensiblement identiques, appliquant un retard différent à chaque sous-signal RF individuel de sorte que la différence de retard entre les sous-signaux RF soit au moins égale à la durée d'un élément, puis combinant les au moins deux sous-signaux RF avec des retards différents.

2. Procédé de communication intérieure, le procédé comprenant
- moyens de réception sans fil (A2 à A4) recevant un signal sans fil (Ws) de la part d'une station mobile (Ms) se trouvant dans un environnement confiné (B),
- moyens de réception sans fil (A2 à A4) transférant le signal reçu vers une unité distante RF (RA) qui adapte le signal pour la transmission dans un réseau RF (C2),
- réseau RF (C2) distribuant le signal RF vers une station de base (Bs), et la station de base (Bs) délivrant le signal reçu à un récepteur à ratissage,
le procédé étant **caractérisé par**
- arrangement à trajets multiples (MA), agencé à l'intérieur du réseau RF, fractionnant le signal RF en au moins deux sous-signaux RF sensiblement identiques, appliquant un retard différent à chaque sous-signal RF individuel de sorte que la différence de retard entre les sous-signaux RF soit au moins égale à la durée d'un élément, puis combinant les au moins deux sous-signaux RF avec des retards différents.

3. Système de communication qui étend les communications sans fil d'un environnement extérieur à un environnement intérieur confiné (B) et vice-versa, le système de communication comprenant :
- station de base (Bs) recevant un signal destiné à une station mobile (Ms) se trouvant à l'intérieur de l'environnement confiné (B),
- moyens pour adapter ledit signal pour la transmission dans un réseau RF (C2),
- réseau RF (C2) distribuant le signal RF vers une unité distante RF (RA) qui adapte le signal RF pour la transmission grâce à des moyens d'émission sans fil (A2 à A4) se trouvant à l'intérieur de l'environnement confiné (B),
- station mobile (Ms) avec un récepteur à ratissage pour recevoir le signal sans fil (Ws) émis par les moyens d'émission sans fil (A2 à A4),
- moyens de réception sans fil (A2 à A4) se trouvant à l'intérieur de l'environnement confiné (B) pour recevoir un signal sans fil (Ws) de la part d'une station mobile (Ms) se trouvant à l'intérieur de l'environnement confiné (B),
- moyens pour transférer ledit signal reçu depuis lesdits moyens de réception sans fil (A2 à A4) vers l'unité distante RF (RA), qui adapte le signal pour la transmission dans un réseau RF (C2),
- réseau RF (C2) distribuant ledit signal RF vers la station de base (Bs),
- station de base (Bs) délivrant le signal à un récepteur à ratissage,
ledit système de communication étant **caractérisé par**
un arrangement à trajets multiples (MA) agencé à l'intérieur du réseau RF (C2), l'arrangement à trajets multiples (MA) comprenant:
- moyens pour fractionner le signal RF en au moins deux sous-signaux RF sensiblement identiques,
- moyens pour appliquer un retard différent à chaque sous-signal RF individuel, de sorte que la différence de retard entre les sous-signaux RF soit au moins égale à la durée d'un élément, et
- moyens pour combiner les au moins deux sous-signaux RF avec des retards différents
afin de générer un signal RF représentant des attributs de trajets multiples et d'améliorer les communications intérieures sans fil avec une station de base (Bs) et/ou mobile (Ms) comprenant un récepteur à ratissage.
